# EUROPÄISCHE PATENTSCHRIFT

(11) **EP 1 068 105 B1**
(45) Veröffentlichungstag und Bekanntmachung des Hinweises auf die Patenterteilung: **06.02.2002**
(21) Anmeldenummer: 99915706.8
(22) Anmeldetag: 25.03.1999
(51) Int. Cl.: B60R 21/20

(54) **GASSACK-MODUL FÜR EIN FAHRZEUGINSASSEN-RÜCKHALTESYSTEM**
AIR BAG MODULE FOR A VEHICLE OCCUPANT RESTRAINT SYSTEM
MODULE D'AIRBAG POUR UN SYSTEME DE RETENUE DES OCCUPANTS D'UN VEHICULE

(30) Priorität: 02.04.1998 DE 29806083 U
(43) Veröffentlichungstag der Anmeldung: 17.01.2001
(73) Patentinhaber: TRW Occupant Restraint Systems GmbH & Co. KG, 73553 Alfdorf (DE)
(72) Erfinder: LANG, Norbert, D-73575 Leinzell (DE)
(74) Vertreter: Sties, Jochen, Dipl.-Ing.
(86) Internationale Anmeldenummer: EP9902039
(87) Internationale Veröffentlichungsnummer: WO9951464

(56) Entgegenhaltungen:
- EP-A- 0 680 852
- DE-A- 3 708 744
- DE-A- 4 217 177
- DE-A- 4 233 749
- DE-U- 29 721 644
- DE-U- 29 721 681
- US-A- 5 411 288
- PATENT ABSTRACTS OF JAPAN vol. 017, no. 358 (M-1440), 7. Juli 1993 (1993-07-07) & JP 05 050893 A (NISSAN MOTOR CO LTD), 2. März 1993 (1993-03-02)
- PATENT ABSTRACTS OF JAPAN vol. 095, no. 009, 31. Oktober 1995 (1995-10-31) & JP 07 164989 A (SUZUKI MOTOR CORP), 27. Juni 1995 (1995-06-27)

## Beschreibung

Die Erfindung betrifft ein Gassack-Modul für ein Fahrzeuginsassen-Rückhaltesystem, mit einem Gehäuse für einen Gasgenerator und einem von diesem entfaltbaren Gassack, und mit einer Abdeckung, die aus einer geschlossenen Stellung in eine geöffnete Stellung überführt werden kann, wobei die Abdeckung mit dem Gehäuse mittels wenigstens eines Scharniers verbunden ist und wobei die Abdeckung mit einem Schwenkteil verbunden ist, das wiederum mittels des Scharniers mit dem Gehäuse verbunden ist.

Ein solches Gassack-Modul ist aus der EP 0 680 852 bekannt. Hier wird die Abdeckung nach der Aktivierung des Gasgenerators durch den sich entfaltenden Gassack geöffnet. Da die Abdeckung bei einem solchen Gassack-Modul mittels einem ihrer Außenränder mit dem Gehäuse oder einer umgebenden Fahrzeugverkleidung verbunden ist, wird die Abdeckung beim Öffnen in den Fahrzeuginnenraum hinein verschwenkt. Daraus resultiert die sogenannte Anschußgefahr, also die Gefahr, daß der Fahrzeuginsasse von der sich öffnenden Abdeckung getroffen wird. Außerdem muß die Kraft zum Öffnen der Abdeckung ausschließlich durch den sich entfaltenden Gassack bereitgestellt werden.

Die Erfindung schafft ein Gassack-Modul, bei dem von der Abdeckung keinerlei Anschußgefahr ausgeht und die Kraft zum Öffnen der Abdeckung zumindest zu einem Teil von einem den Öffnungsvorgang unterstützenden Element bereitgestellt wird. Ein Gassack-Modul der eingangs genannten Art zeichnet sich gemäß der Erfindung nämlich dadurch aus, daß eine Feder vorgesehen ist, die das Schwenkteil relativ zum Gehäuse in eine Stellung beaufschlagt, die der geöffneten Stellung der Abdeckung entspricht. Die Verwendung des Schwenkteils ermöglicht es außerdem, die Abdeckung beim Öffnen von einem Fahrzeuginsassen weg zu verschwenken, wodurch die Anschußgefahr verringert oder ganz beseitigt ist.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Figur 1 in einer perspektivischen Ansicht ein Gassack-Modul gemäß einer ersten Ausführungsform der Erfindung mit geschlossener Abdeckung;
- Figur 2 in einer Seitenansicht das Gassack-Modul von Figur 1;
- Figur 3 in einer Seitenansicht ein Gassack-Modul gemäß der ersten Ausführungsform mit teilweise geöffneter Abdeckung;
- Figur 4 das Gassack-Modul von Figur 3, wobei zur besseren Übersichtlichkeit einige Bauteile weggelassen wurden;
- Figur 5 in einer perspektivischen Ansicht das Gassack-Modul von Figur 3;
- Figur 6 in einer perspektivischen Ansicht ein Gassack-Modul gemäß einer zweiten Ausführungsform der Erfindung mit teilweise geöffneter Abdeckung;
- Figur 7 eine andere perspektivische Ansicht des Gassack-Moduls von Figur 6;
- Figur 8 das Gassack-Modul von Figur 7 in einer Seitenansicht, wobei zur besseren Übersichtlichkeit einige Bauteile weggelassen wurden;
- Figur 9 in einer perspektivischen Ansicht ein Gassack-Modul gemäß einer dritten Ausführungsform der Erfindung, wobei ein Teil der Abdeckung zur besseren Übersichtlichkeit weggelassen wurde;
- Figur 10 in einer Seitenansicht das Gassack-Modul von Figur 9;
- Figur 11 in einer perspektivischen Teilansicht das Gassack-Modul von Figur 9;
- die Figuren 12 und 13 in einer Seitenansicht ein Gassack-Modul gemäß der dritten Ausführungsform der Erfindung, wobei die Abdeckung teilgeöffnet bzw. vollständig geöffnet ist;
- Figur 14 eine perspektivische Ansicht des Gassack-Moduls von Figur 13;
- Figur 15 in einer perspektivischen Teilansicht das Gassack-Modul von Figur 14;
- die Figuren 16 bis 18 in einer abgebrochenen Schnittansicht verschiedener Ausführungsformen einer Trennlinie zwischen zwei Abdeckungsteilen.

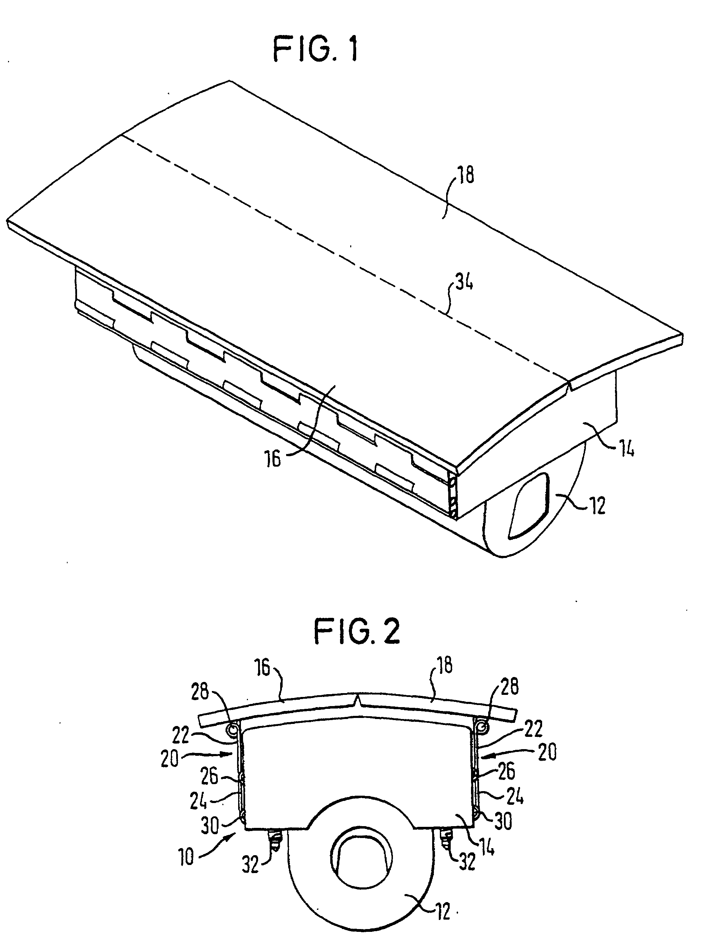

In den Figuren 1 bis 5 ist ein Gassack-Modul gemäß einer ersten Ausführungsform der Erfindung gezeigt. Das Gassack-Modul enthält ein Gehäuse 10, das ein Unterteil 12 zur Aufnahme eines Gasgenerators und ein Oberteil 14 zur Aufnahme eines Gassacks aufweist. Die für den Austritt des Gassacks vorgesehene, offene Seite des Oberteils 14 ist von einer Abdeckung verschlossen, die aus zwei Teilstücken 16, 18 besteht. Jedes Abdeckungs-Teilstück ist mittels eines Schwenkteils 20 mit dem Gehäuse 10 verbunden. Jedes Schwenkteil besteht aus zwei Teilstücken 22, 24, die mittels eines Scharniers 26 miteinander verbunden sind. Jedes Teilstück 22 ist mit dem entsprechenden Teilstück der Abdeckung mittels eines Scharniers 28 verbunden, und jedes Teilstück 24 ist mit dem Gehäuse mittels eines Scharniers 30 verbunden. Die Scharniere 30 sind am Oberteil 14 des Gehäuses 10 mittels Schraubbolzen 32 festgelegt.

Die drei Scharniere 26, 28, 30 erstrecken sich parallel zueinander und entlang einer der Längsseiten des Oberteils 14 des Gehäuses 10. Das untere Scharnier 30, welches das Schwenkteil 22, 24 mit dem Gehäuse verbindet, erstreckt sich entlang der dem Unterteil 12 des Gehäuses zugewandten Längskante des Oberteils 14.

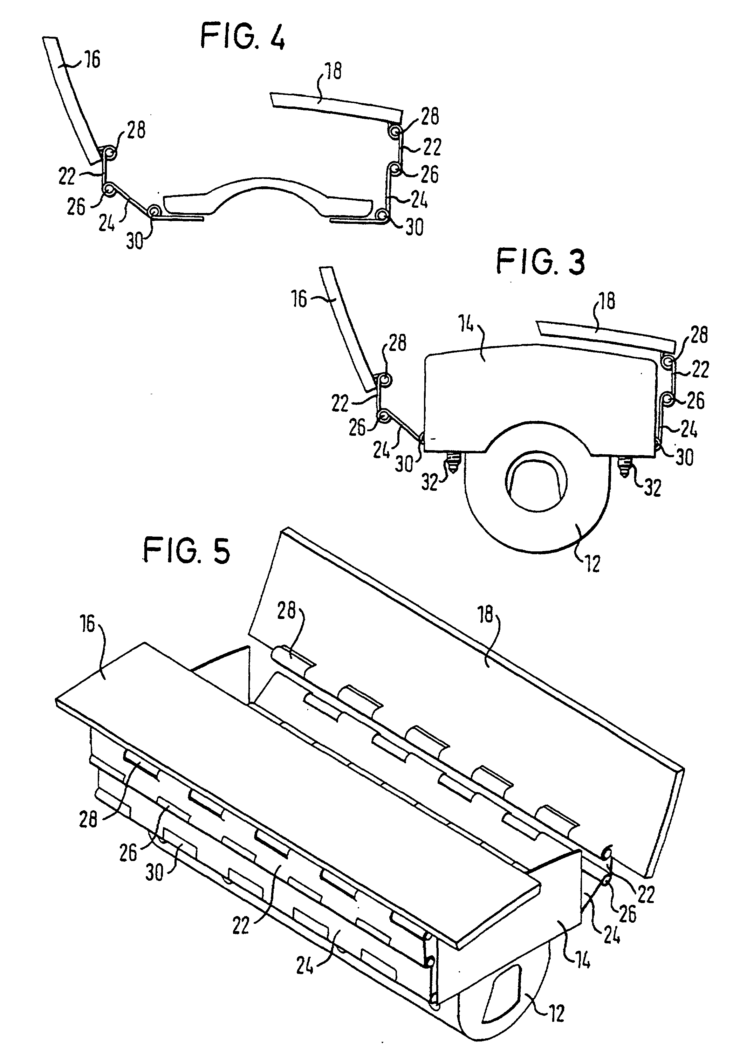

Aus der in den Figuren 1 und 2 gezeigten Stellung, in der die beiden Teilstücke 16, 18 der Abdeckung aneinander entlang einer Trennlinie 34 anliegen, kann die Abdeckung in eine geöffnete Stellung überführt werden. In dieser Stellung sind die beiden Abdeckungsteile 16, 18 geöffnet. Zum besseren Verständnis ist in den Figuren 3 bis 5 das Gassack-Modul mit lediglich einem geöffneten Abdeckungs-Teilstück gezeigt. Hier ist zu sehen, daß das entsprechende Teilstück, hier das Teilstück 16, wenn es in seine geöffnete Stellung überführt wird, zum Unterteil 12 des Gehäuses 10 hin verlagert wird. Es ist deutlich zu sehen, daß das Scharnier 28 des geöffneten Teilstücks 16 während des Öffnens nach unten hin bewegt wird, also weg von einem Fahrzeuginsassen, der von dem Gassack-Modul zurückgehalten werden soll. Diese Verlagerung ist insbesondere darauf zurückzuführen, daß sich die vom Scharnier 30 gebildete Schwenkachse des Schwenkteils in einem Abstand von einer Ebene befindet, die von der Abdeckung im geschlossenen Zustand definiert wird.

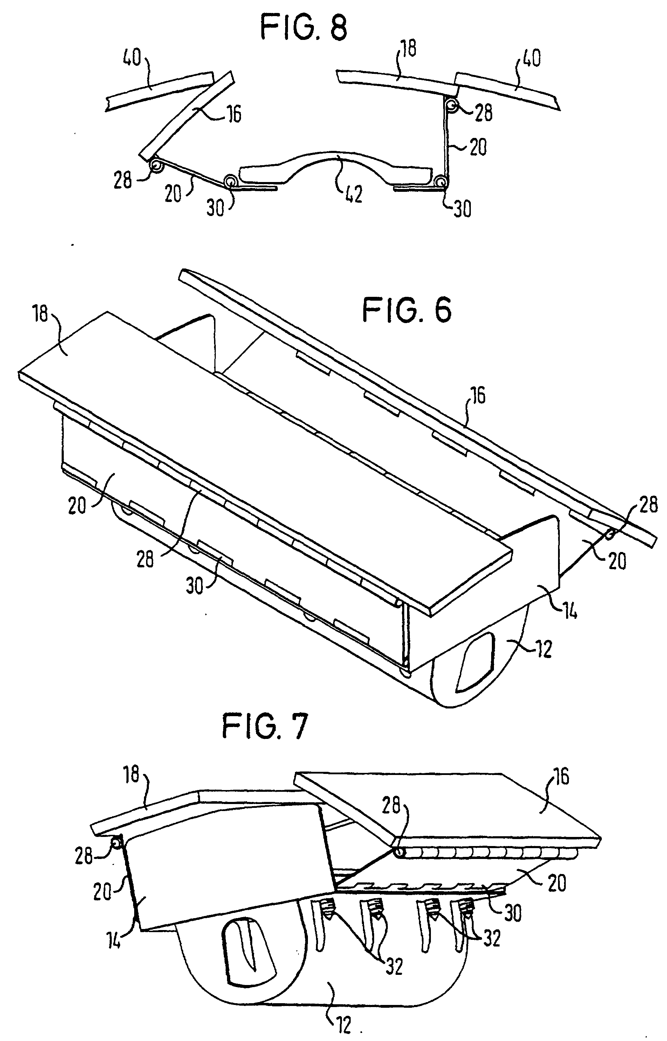

In den Figuren 6 bis 8 ist ein Gassack-Modul gemäß einer zweiten Ausführungsform der Erfindung gezeigt. Im Unterschied zur ersten Ausführungsform ist hier das Schwenkteil 20 einteilig ausgebildet. Angrenzend an die Teilstücke 16, 18 der Abdeckung ist eine Innenraumverkleidung 40 eines Fahrzeugs gezeigt, in welchem das Gassack-Modul angeordnet ist. Im Inneren des Oberteils ist ferner schematisch ein Befestigungsrahmen 42 für einen (nicht dargestellten) Gassack gezeigt, der im Inneren des Oberteils 14 angeordnet werden kann.

Es ist zu sehen, daß jedes Teilstück der Abdeckung, wenn diese geöffnet wird, unter die Innenraumverkleidung 40 abtaucht. Dies ist gewährleistet durch das Zusammenspiel zwischen den beiden Scharnieren 28 und 30 und dem Schwenkteil 20, das relativ zum entsprechenden Abdeckungsteil und zum Gehäuse verschwenkt werden kann. Da die Abdeckungs-Teilstücke unter die Innenraumverkleidung 40 abtauchen, besteht keinerlei Anschußgefahr für einen Fahrzeuginsassen.

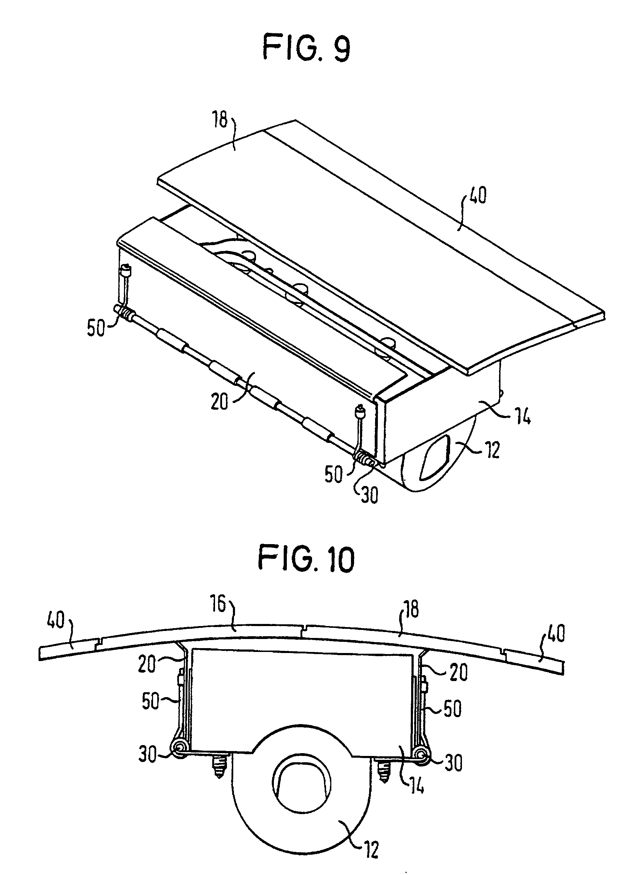

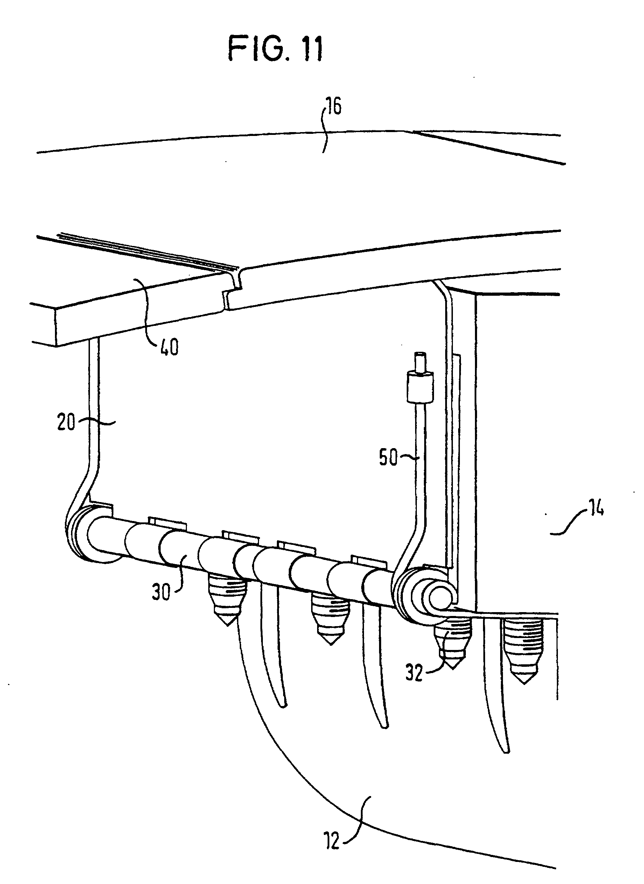

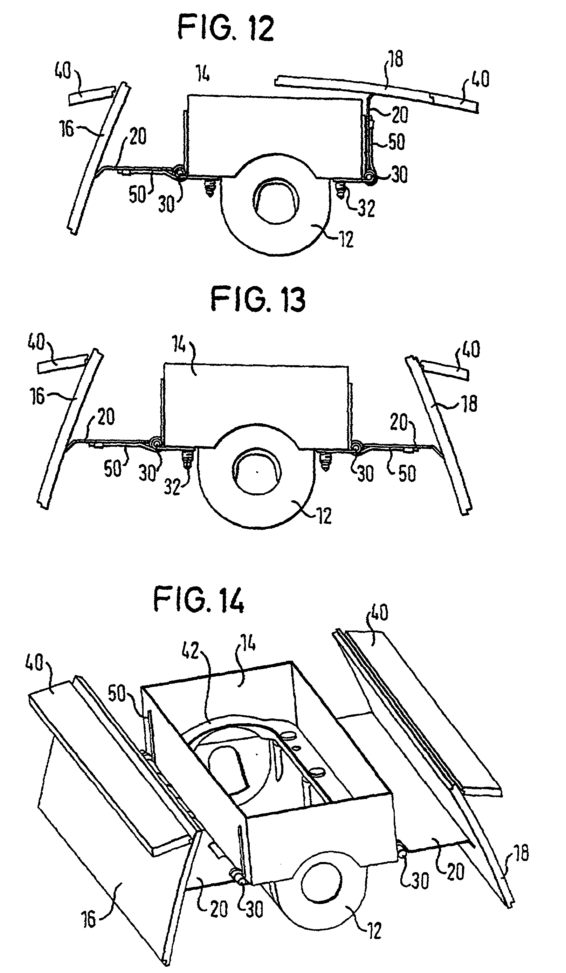

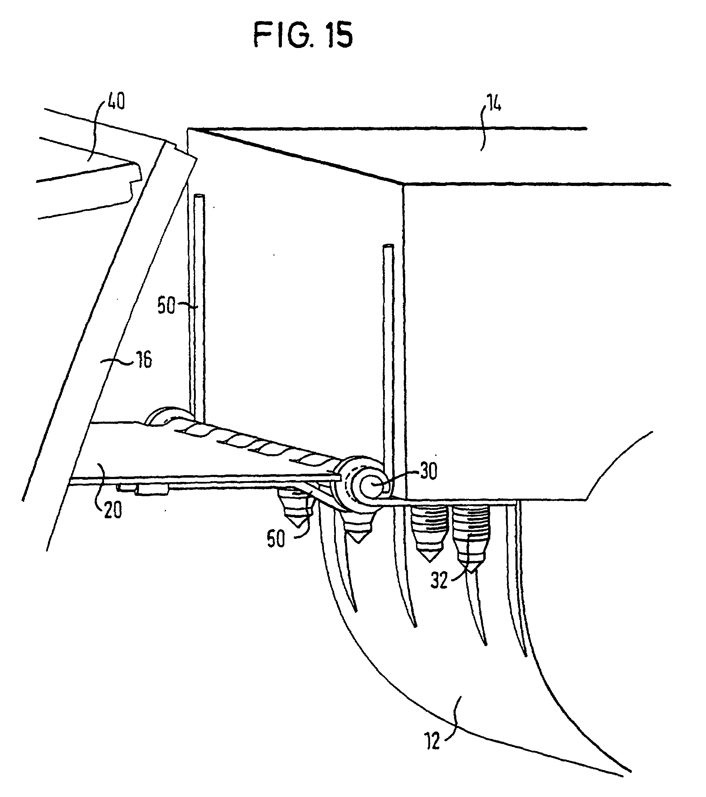

In den Figuren 9 bis 15 ist ein Gassack-Modul gemäß einer dritten Ausführungsform der Erfindung gezeigt. Im Unterschied zur ersten und zur zweiten Ausführungsform ist hier kein Scharnier zwischen dem Schwenkteil und dem entsprechenden Teilstück der Abdeckung vorgesehen; das Schwenkteil 20 ist starr mit dem entsprechenden Teilstück 16, 18 der Abdeckung verbunden. Weiterhin ist eine Schenkelfeder 50 vorgesehen, deren einer Schenkel am Gehäuse und deren anderer Schenkel am Schwenkteil 20 festgelegt ist. Diese Schenkelfeder 50 beaufschlagt das Schwenkteil 20 in eine Stellung, die der geöffneten Abdeckung entspricht; sie versucht also, die Schwenkteile 20 nach außen vom Oberteil 14 des Gehäuses 10 weg zu verschwenken. Der gewundene Teil der Schenkelfeder 50 ist konzentrisch mit der Schwenkachse des Scharniers 30 angeordnet.

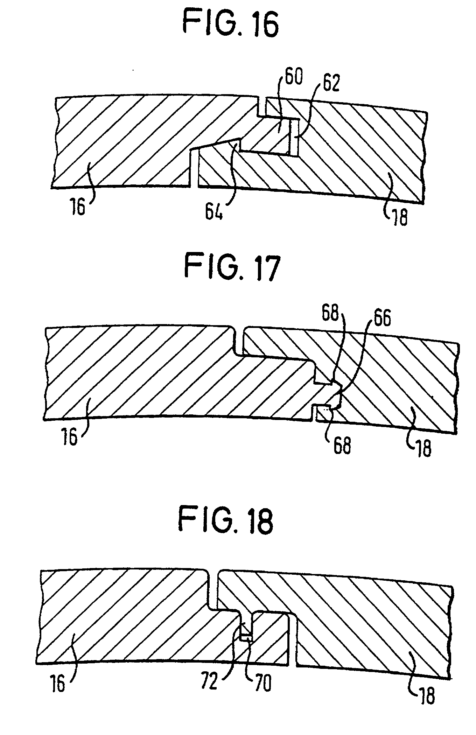

In der geschlossenen Stellung liegen die beiden Teilstücke 16, 18 der Abdeckung an ihren voneinander entgegengesetzten Außenrändern an den zugewandten Rändern der Innenraumverkleidung 40 an. Auf diese Weise kann eine Abstützkraft bereitgestellt werden, die der Beaufschlagung durch die Schenkelfeder 50 entgegenwirkt. Zusätzlich können die einander zugewandten Ränder der Teilstücke 16, 18 der Abdeckung in einer Weise ausgeführt sein, wie sie in den Figuren 16 bis 18 gezeigt ist.

In Figur 16 ist zu sehen, daß das Teilstück 16 mit einer Nase 60 versehen ist, die in eine entsprechende Ausnehmung 62 des Teilstücks 18 eingreift. Das Teilstück 18 ist mit einem Rastfortsatz 64 versehen, der an einem Absatz der Nase 60 des Teilstücks 16 angreift. Auf diese Weise ist eine Rastverbindung ausgebildet, die in der Lage ist, Zugkräfte, welche die beiden Teilstücke 16, 18 voneinander zu entfernen suchen, bis zu einer gewissen Höhe zu übertragen. Die übertragbaren Zugkräfte wirken ebenfalls der von den Schenkelfedern 50 bereitgestellten Beaufschlagung entgegen.

In Figur 17 ist zu sehen, daß das Teilstück 16 mit einer symmetrischen Nase 66 versehen ist, die auf beiden Seiten mit einem Vorsprung 68 versehen ist. Die Nase 66 greift in eine komplementäre Aussparung im Teilstück 18 ein. Auch auf diese Weise können Zugkräfte bis zu einer gewissen Höhe übertragen werden.

In Figur 18 ist zu sehen, daß das Teilstück 18 mit einem Steg 70 versehen ist, der sich parallel zur Schwenkachse erstreckt, die durch das Scharnier 30 vorgegeben ist, und sich allgemein rechtwinklig zu einer Ebene erstreckt, die vom Teilstück 18 definiert ist. Der Steg 70 greift in eine komplementäre Nut 72 im Teilstück 16 ein. Auch diese Gestaltung ermöglicht es, Zugkräfte zwischen den beiden Teilstücken 16, 18 zu übertragen.

Wenn der im Inneren des Oberteils 14 angeordnete Gassack aktiviert wird, übt dieser eine Schubwirkung auf die beiden Teilstücke 16, 18 der Abdeckung aus. Diese werden dann geringfügig verschwenkt, so daß ihre an der Innenraumverkleidung 40 anliegenden Außenränder unter die Innenraumverkleidung gedrückt werden. Gleichzeitig wird eine solche Kraft auf die Teilstücke 16, 18 ausgeübt, daß die von der Rastverbindung zwischen den beiden Teilstücken übertragbare Zugkraft überschritten wird. Die beiden Abdeckungsteile 16, 18 werden dann unterstützt von der Schenkelfeder 50 nach außen unter die Innenraumverkleidung 40 verschwenkt. Aufgrund der vorgegebenen Schwenkbahn tritt keinerlei Anschußgefahr für einen Fahrzeuginsassen auf.

## Patentansprüche

1. Gassack-Modul für ein Fahrzeuginsassen-Rückhaltesystem, mit einem Gehäuse (10) für einen Gasgenerator und einem von diesem entfaltbaren Gassack, und mit einer Abdeckung (16, 18), die aus einer geschlossenen Stellung in eine geöffnete Stellung überführt werden kann, wobei die Abdeckung (16, 18) mit dem Gehäuse (10) mittels wenigstens eines Scharniers (30) verbunden ist und wobei die Abdeckung (16, 18) mit einem Schwenkteil (20) verbunden ist, das wiederum mittels des Scharniers (30) mit dem Gehäuse (10) verbunden ist, **dadurch gekennzeichnet, daß** eine Feder (50) vorgesehen ist, die das Schwenkteil (20) relativ zum Gehäuse (10) in eine Stellung beaufschlagt, die der geöffneten Stellung der Abdeckung (16, 18) entspricht.

2. Gassack-Modul nach Anspruch 1, **dadurch gekennzeichnet, daß** die Feder eine Schenkelfeder (50) ist, deren einer Schenkel mit dem Gehäuse (10) und deren anderer Schenkel mit dem Schwenkteil (20) verbunden ist.

3. Gassack-Modul nach Anspruch 1, **dadurch gekennzeichnet, daß** zwischen der Abdeckung (16, 18) und dem Schwenkteil (20) ein Scharnier (28) vorgesehen ist.

4. Gassack-Modul nach Anspruch 3, **dadurch gekennzeichnet, daß** sich das Scharnier (30) zwischen dem Gehäuse (10) und dem Schwenkteil (20) parallel zu dem Scharnier (28) zwischen dem Schwenkteil (20) und dem Abdeckungsteil (16, 18) erstreckt.

5. Gassack-Modul nach einem der Ansprüche 3 und 4, **dadurch gekennzeichnet, daß** das Schwenkteil (20) zweiteilig ausgeführt ist, wobei zwischen den beiden Teilstücken (22, 24) ein Scharnier (26) vorgesehen ist.

6. Gassack-Modul nach einem der vorhergehenden Ansprüche, **dadurch gekennzeichnet, daß** das Scharnier (30) zwischen dem Schwenkteil (20) und dem Gehäuse (10) beabstandet von einer Ebene angeordnet ist, die von der Abdeckung (16, 18) definiert wird.

7. Gassack-Modul nach einem der vorhergehenden Ansprüche, **dadurch gekennzeichnet, daß** das Gehäuse (10) ein Unterteil (12) für die Aufnahme des Gasgenerators und ein Oberteil (14) für die Aufnahme des Gassacks aufweist, daß das Oberteil (14) kastenförmig ausgebildet ist und daß sich das Scharnier (30) zwischen dem Schwenkteil (20) und dem Gehäuse (10) entlang einer dem Unterteil (12) des Gehäuses (10) zugewandten Kante des Oberteils (14) erstreckt.

8. Gassack-Modul nach einem der vorhergehenden Ansprüche, **dadurch gekennzeichnet, daß** die Abdeckung aus zwei Teilstücken (16, 18) besteht, die jeweils mittels eines Schwenkteils (20) mit dem Gehäuse (10) verbunden sind.

9. Gassack-Modul nach Anspruch 8, **dadurch gekennzeichnet, daß** die beiden Teilstücke (16, 18) so ineinander greifen, daß eine Zugkraft, welche die beiden Teilstücke (16, 18) voneinander zu trennen sucht, bis zu einer gewissen Höhe übertragen werden kann.

## Claims

1. A gas bag module for a vehicle occupant restraint system, comprising a housing (10) for a gas generator and a gas bag which can be unfolded by the latter, and comprising a cover (16, 18) which can be converted from a closed position into an open position, the cover (16, 18) being connected to the housing (10) by means of at least one hinge (30) and the cover (16, 18) being connected to a swivel section (20) which in turn is connected to the housing (10) by means of the hinge (30), **characterized in that** a spring (50) is provided which biases the swivel section (20), with respect to the housing (10), into a position which corresponds to the open position of the cover (16, 18).

2. The gas bag module according to claim 1, **characterized in that** the spring is a leg spring (50), one leg of which is connected to the housing (10) and the other to the swivel section (20).

3. The gas bag module according to claim 1, **characterized in that** a hinge (28) is provided between the cover (16, 18) and the swivel section (20).

4. The gas bag module according to claim 3, **characterized in that** the hinge (30) between the housing (10) and the swivel section (20) extends in parallel to the hinge (28) between the swivel section (20) and the cover part (16, 18).

5. The gas bag module according to either one of the claims 3 and 4, **characterized in that** the swivel section (20) has a two-piece structure, a hinge (26) being provided between the two components (22, 24).

6. The gas bag module according to any one of the preceding claims, **characterized in that** the hinge (30) between the swivel section (20) and the housing (10) is arranged at a distance from a plane defined by the cover (16, 18).

7. The gas bag module according to any one of the preceding claims, **characterized in that** the housing (10) comprises a lower part (12) to house the gas generator and an upper part (14) to house the gas bag, that the upper part (14) is box-shaped, and that the hinge (30) between the swivel section (20) and the housing (10) extends along an edge of the upper part (14) facing the lower part (12) of the housing (10).

8. The gas bag module according to any one of the preceding claims, **characterized in that** the cover consists of two components (16, 18) which each are connected to the housing (10) by means of a swivel section (20).

9. The gas bag module according to claim 8, **characterized in that** the two components (16, 18) engage each other in such a way that a traction force, tending to separate the two components (16, 18), can be transmitted up to a certain limit.

## Revendications

1. Module de coussin à gaz pour un système de retenue d'occupants d'un véhicule, comprenant un boîtier (10) pour un générateur de gaz et un coussin à gaz qui peut être déployé par celui-ci, et comprenant un couvercle (16, 18) qui peut être amené depuis une position fermée dans une position ouverte, le couvercle (16, 18) étant relié au boîtier (10) au moyen d'au moins une charnière (30) et le couvercle (16, 18) étant relié à une partie pivotante (20) qui est à son tour reliée au boîtier (10) au moyen de la charnière (30), **caractérisé en ce qu'**il est prévu un ressort (50) qui sollicite la partie pivotante (20) par rapport au boîtier (10) dans une position qui correspond à la position ouverte du couvercle (16, 18).

2. Module de coussin à gaz selon la revendication 1, **caractérisé en ce que** le ressort est un ressort à branches (50) dont une branche est reliée au boîtier (10) et l'autre branche est reliée à la partie pivotante (20).

3. Module de coussin à gaz selon la revendication 1, **caractérisé en ce qu'**il est prévu une charnière (28) entre le couvercle (16, 18) et la partie pivotante (20).

4. Module de coussin à gaz selon la revendication 3, **caractérisé en ce que** la charnière (30) s'étend entre le boîtier (10) et la partie pivotante (20) parallèlement à la charnière (28) entre la partie pivotante (20) et le couvercle (16, 18).

5. Module de coussin à gaz selon l'une des revendications 3 et 4, **caractérisé en ce que** la partie pivotante (20) est réalisée en deux parties, une charnière (26) étant prévue entre les deux éléments partiels (22, 24).

6. Module de coussin à gaz selon l'une quelconque des revendications précédentes, **caractérisé en ce que** la charnière (30) est agencée entre la partie pivotante (20) et le boîtier (10) à distance d'un plan qui est défini par le couvercle (16, 18).

7. Module de coussin à gaz selon l'une quelconque des revendications précédentes, **caractérisé en ce que** le boîtier (10) présente une partie inférieure (12) pour recevoir le générateur de gaz et une partie supérieure (14) pour recevoir le coussin à gaz, **en ce que** la partie supérieure (14) est réalisée en forme de caisson et **en ce que** la charnière (30) entre la partie pivotante (20) et le boîtier (10) s'étend le long d'une arête de la partie supérieure (14) tournée vers la partie inférieure (12) du boîtier (10).

8. Module de coussin à gaz selon l'une quelconque des revendications précédentes, **caractérisé en ce que** le couvercle est constitué de deux éléments partiels (16, 18) qui sont chacun reliés au boîtier (10) au moyen d'une partie pivotante (20).

9. Module de coussin à gaz selon la revendication 8, **caractérisé en ce que** les deux éléments partiels (16, 18) s'engagent l'un dans l'autre de telle manière qu'une force de traction qui tend à séparer les deux éléments partiels (16, 18) peut être transmise jusqu'à une certaine limite.
